# EUROPÄISCHE PATENTANMELDUNG

(11) **EP 3 067 761 A1**
(43) Veröffentlichungstag der Anmeldung: **14.09.2016**
(21) Anmeldenummer: 16156248.3
(22) Anmeldetag: 18.02.2016
(51) Int. Cl.: G05B 15/02, G05B 23/02, H04L 12/28

(54) **VERFAHREN ZUR FEHLERANALYSE UND BEHEBUNG IN EINEM HAUSTECHNIKGERÄT UND HAUSTECHNIKSYSTEM**

(30) Priorität: 10.03.2015 DE 102015204290
(71) Anmelder: Stiebel Eltron GmbH & Co. KG, 37603 Holzminden (DE)
(72) Erfinder: Voßmer, Ottfried, 34369 Hofgeismar (DE); Golüke, Dominik, 37671 Höxter (DE); Hohoff, Peter, 44263 Dortmund (DE)

(57) **Zusammenfassung**

Die Erfindung betrifft ein Verfahren zur Fehleranalyse und Fehlerbehebung eines Haustechnikgerätes. Fehler beim Betrieb werden erfasst und mindestens ein Fehlercode wird basierend auf den erfassten Fehlern beim Betrieb des Haustechnikgerätes bestimmt. Der mindestens eine Fehlercode wird in einen zweidimensionalen Code umgewandelt und auf einer Anzeigeeinheit des Haustechnikgerätes angezeigt. Der angezeigte zweidimensionale Code wird mittels eines mobilen Endgerätes abgescannt und der abgescannte zweidimensionale Code wird in dem mobilen Endgerät decodiert, um den mindestens einen Fehlercode zu extrahieren. Der Fehlercode und eine damit assoziierte Störung des Haustechnikgerätes kann auf einer Anzeigeeinheit des mobilen Endgerätes dargestellt werden. Mindestens eine Ursache und/oder eine Fehlerdiagnose wird auf der Anzeigeeinheit dargestellt. Schließlich werden Informationen zur Fehlerbehebung auf der Anzeigeeinheit des mobilen Endgerätes dargestellt.

## Beschreibung

Die vorliegende Erfindung betrifft ein Verfahren zur Fehleranalyse und Fehlerbehebung in einem Haustechnikgerät sowie ein Haustechniksystem.

Wenn ein Fehler in einem Haustechnikgerät wie beispielsweise einem Durchlauferhitzer oder dergleichen auftritt, dann wird ein Fehlercode auf einem Display oder einer Anzeige des Haustechnikgerätes dargestellt. Anhand dieses Fehlercodes kann eine weitere Fehleranalyse bzw. Reparatur durch den Fachhandwerker oder einen Service-Techniker durchgeführt werden.

DE 10 2010 050 192 A1 beschreibt ein Verfahren zur Ermittlung von Daten. Hierbei werden die zu Übermittelnden Daten (beispielsweise ein Fehlercode) codiert und mittels eines zweidimensionalen Codes auf einem Display des Haustechnikgerätes dargestellt, Mittels eines mobilen Gerätes kann der angezeigte Code abgescannt und decodiert werden. Der extrahierte Fehlercode kann dann an einen Servicetechniker oder einen technischen Support weitergeleitet werden. Basierend auf dem übermittelten Fehlercode kann der Servicetechniker dann eine Fehleranalyse und Fehlerbehebung durchführen.

Es ist eine Aufgabe der vorliegenden Erfindung, ein Verfahren zur Fehleranalyse und Fehlerbehebung für ein Haustechnikgerät sowie ein entsprechendes Haustechnikgerät vorzusehen, mit welchem eine effektivere Fehleranalyse und Fehlerbehebung bei einem Haustechnikgerät ermöglicht wird.

Diese Aufgabe wird durch ein Verfahren zur Fehleranalyse und Fehlerbehebung nach Anspruch 1 sowie durch ein Haustechniksystem nach Anspruch 2 gelöst.

Somit wird ein Verfahren zur Fehleranalyse und Fehlerbehebung eines Haustechnikgerätes vorgesehen. Fehler beim Betrieb des Haustechnikgerätes werden erfasst und mindestens ein Fehlercode wird basierend auf den erfassten Fehlern beim Betrieb des Haustechnikgerätes bestimmt. Der mindestens eine Fehlercode wird in einen zweidimensionalen Code umgewandelt und auf einer Anzeigeeinheit des Haustechnikgerätes angezeigt. Der angezeigte zweidimensionale Code wird mittels eines mobilen Endgerätes abgescannt und der abgescannte zweidimensionale Code wird in dem mobilen Endgerät decodiert, um den mindestens einen Fehlercode zu extrahieren. Der Fehlercode und eine damit assoziierte Störung des Haustechnikgerätes kann auf einer Anzeigeeinheit des mobilen Endgerätes dargestellt werden. Mindestens eine Ursache und/oder eine Fehlerdiagnose wird auf der Anzeigeeinheit dargestellt. Schließlich werden Informationen zur Fehlerbehebung auf der Anzeigeneinheit des mobilen Endgerätes dargestellt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt ein schematisches Blockschaltbild eines Haustechniksystems gemäß einem ersten Ausführungsbeispiel der Erfindung,
- Fig.2A: zeigt ein Flussablaufdiagramm, welches in dem Haustechnikgerät gemäß dem ersten Ausführungsbeispiel abläuft,
- Fig. 2B: zeigt ein Flussablaufdiagramm der Verfahrensschritte in dem mobilen Endgerät gemäß dem ersten Ausführungsbeispiel, und
- Fig. 3: zeigt ein Flussablaufdiagramm der Verfahrensschritte in dem mobilen Endgerät gemäß einem zweiten Ausführungsbeispiel.

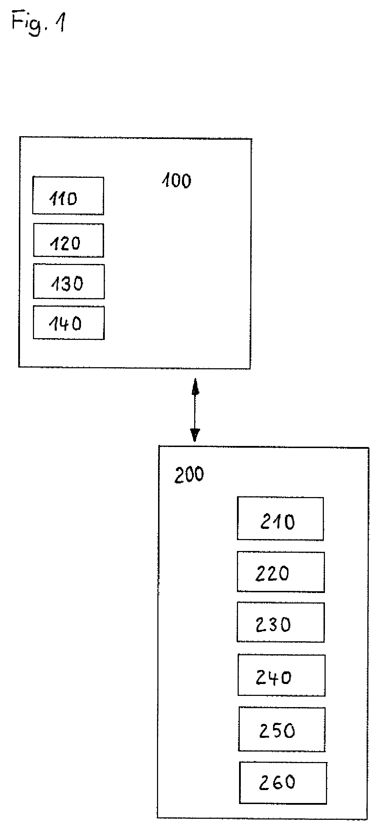

Fig. 1 zeigt ein schematisches Blockschaltbild eines Haustechniksystems mit einem Haustechnikgerät sowie einem mobilen Endgerät gemäß einem ersten Ausführungsbeispiel der Erfindung. Gemäß der Erfindung ist ein Haustechnikgerät 100 wie beispielsweise ein Durchlauferhitzer, eine Wärmepumpe, ein Lüftungsgerät, ein Heizgerät, eine Heizungsanlage, eine Solaranlage, ein Warmwassergerät oder eine Kombination der o. g. Geräte vorgesehen.

In diesen Geräten können Fehler auftreten, welche durch einen Servicetechniker oder einen Fachhandwerker zu beheben sind. Bestimmte Fehler dürfen nicht durch den Anwender des Haustechnikgerätes behoben werden.

Das Haustechnikgerät 100 weist eine Anzeigeeinheit 110, ein Bedienelement 120, eine Fehtererfassungseinheit 130 und eine Steuereinheit 140 auf.

Auf der Anzeigeeinheit 110 kann beispielsweise die Solltemperatur, die Isttemperatur sowie andere Informationen dargestellt werden. Mittels des Bedienelementes 120 kann beispielsweise die Solltemperatur eingestellt werden. Ferner kann mittels des Bedienelementes 120 ein Steuermenü des Haustechnikgerätes aufgerufen und ausgewählt werden. Mittels des Bedienelementes 120 kann beispielsweise ein Fehlermenü aufgerufen werden. In diesem Fehlermenü kann beispielsweise ein aufgetretener Fehler, der durch die Fehlerdetektionseinheit 130 erfasst worden ist, dargestellt werden, Die Darstellung kann beispielsweise durch einen zweidimensionalen Code wie beispielsweise einen QR-Code oder dergleichen erfolgen.

Erfindungsgemäß kann ein Fachhandwerker bzw. Servicetechniker ein mobiles Endgerät 200 verwenden, um den auf der Anzeigeeinheit 110 dargestellten Fehlercode bzw. den dargestellten QR-Code oder zweidimensionalen Code abzuscannen. Das mobile Endgerät kann beispielsweise ein Smartphone, ein Tablet oder dergleichen darstellen. Das mobile Endgerät 200 weist eine Anzeigeeinheit 210, eine Kamera 220 zum Abscannen des auf der Anzeigeneinheit 110 dargestellten zweidimensionalen Codes, eine Codedecodierungseinheit 230 zum Decodieren des abgescannten zweidimensionalen Codes, eine Steuereinheit 240, eine Drahtlos-Schnittstelle 250 sowie optional einen Speicher 260 auf. Durch die Kamera 220 des mobilen Endgerätes 200 wird der zweidimensionale Code auf der Anzeigeeinheit 110 des Haustechnikgerätes abgescannt. In der Codedecodierungseinheit 230 wird der in dem zweidimensionalen Code enthaltene Fehlercode sowie weitere Informationen (wie z. B. der Typ des Haustechnikgerätes) decodiert und extrahiert.

Die Steuereinheit 240 dient der Steuerung des Betriebs des mobilen Endgerätes 200 und insbesondere zum Durchführen des erfindungsgemäßen Verfahrens zur Fehleranalyse und Fehlerbehebung. Die Informationen zur Fehleranalyse und Fehlerbehebung können in dem Speicher 260 lokal gespeichert werden. Alternativ dazu können die benötigten Informationen auch mittels der Drahtlosschnittstelle 250 bei Bedarf über das Internet auf das mobile Endgerät 200 übertragen werden.

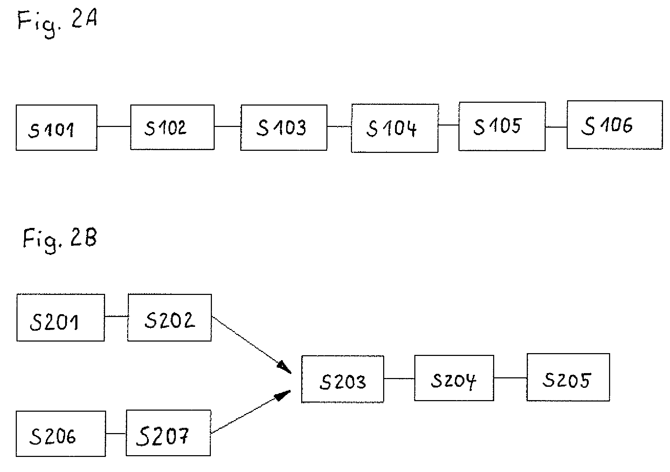

Fig. 2A zeigt ein Flussablaufdiagramm, welches in dem Haustechnikgerät gemäß dem ersten Ausführungsbeispiel abläuft. In Schritt S101 wird an dem Haustechnikgerät mittels des Bedienelementes 120 ein Einstellmenü ausgewählt. In Schritt S102 wird beispielsweise ein Kundendienstmenü ausgewählt und in Schritt S103 wird ein Fehlermenü ausgewählt. Alternativ dazu kann das Fehlermenü auch direkt ausgewählt werden. In Schritt S104 wird ein Fehler soweit vorhanden angezeigt. Die aufgetretenen Fehler können durch die Fehlerdetektionseinheit 130 erfasst und ggf. gespeichert werden.

In Schritt S105 wird ein zweidimensionaler Code, beispielsweise ein QR-Code, basierend auf den erfassten Fehlern erzeugt und in Schritt S106 auf der Anzeigeeinheit 110 des Haustechnikgerätes angezeigt.

Fig. 2B zeigt ein Flussablaufdiagramm der Verfahrensschritte in dem mobilen Endgerät gemäß dem ersten Ausführungsbeispiel. In Schritt S201 wird mittels der Kamera 220 der zweidimensionale Code auf der Anzeigeeinheit 110 des Haustechnikgerätes 100 abgescannt und mittels der Codedecodierungseinheit 230 wird ein Fehlercode bzw. Fehierinformationen aus dem abgescannten zweidimensionalen Code extrahiert. In Schritt S201 kann ein Fehlertyp auf der Anzeigeneinheit 210 des mobilen Endgerätes dargestellt werden. In Schritt S202 kann eine Fehlerursache ermittelt werden. Dies kann entweder direkt auf dem mobilen Endgerät 200 oder zentral auf einem über das Internet verbundenen Server erfolgen, wobei die Kommunikation mit dem Server über die Drahtlos-Schnittstelle 250 erfolgen kann. In Schritt S203 ist die Ursache gefunden und kann ggf. auf der Anzeigeeinheit 210 des mobilen Endgerätes 200 dargestellt werden. In Schritt S204 kann eine Diagnose erstellt und auf der Anzeigeeinheit 210 des mobilen Endgerätes dargestellt werden. Ferner können in Schritt S204 die für die Fehlerbehebung nötigen Schritte auf der Anzeigeeinheit des mobilen Endgerätes dargestellt werden. Somit erhält der Servicetechniker bzw. der Fachhandwerker detaillierte Informationen zu dem aufgetretenen Fehler sowie zur Fehlerbehebung. Wenn der Servicetechniker bzw. Fachhandwerker die entsprechenden dargestellten Schritte durchführt und ggf. die defekten Teile austauscht, dann sollte die Störung in Schritt S205 behoben sein.

Alternativ oder zusätzlich dazu kann in Schritt S206 basierend auf den in der CodeDecodierungseinheit 230 decodierten Fehlerinformationen ein Störungsbild auf der Anzeigeeinheit 210 dargestellt werden. In Schritt S207 kann analog wie in Schritt S202 eine Ursache für den Fehler ermittelt werden. Danach kann der Fluss in Schritt S203 sowie fortfolgend weitergeführt werden.

Alternativ dazu kann der Fluss zu Schritt S208 weiterführen, wenn die Ursache nicht gefunden ist. Der Fluss führt dann wieder zu Schritt S206.

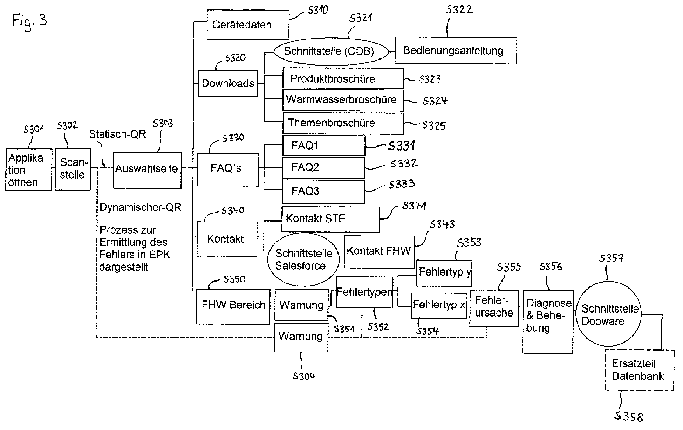

Fig. 3 zeigt ein Flussablaufdiagramm der Verfahrensschritte in dem mobilen Endgerät gemäß einem zweiten Ausführungsbeispiel. In Fig. 3 werden insbesondere die in dem mobilen Endgerät 200 durchgeführten Verfahrensschritte näher erläutert.

In Schritt S301 wird eine Applikation bzw. eine entsprechende App geöffnet. In Schritt S302 wird das Abscannen eines dargestellten zweidimensionalen bzw. QR-Codes initiiert. In Schritt S303 wird eine Auswahlseite für das weitere Vorgehen dargestellt, wobei die dargestellten Optionen von dem erfassten zweidimensionalen oder QR-Code abhängen. In Schritt S310 können die in dem zweidimensionalen Code enthaltenen Gerätedaten dargestellt werden. In Schritt S320 können detaillierte Informationen zu dem Haustechnikgerät ausgewählt werden. In Schritt S322 kann eine Bedienungsanleitung empfangen und dargestellt werden. In Schritt S323 kann eine Produktbroschüre empfangen und dargestellt werden. In Schritt S324 kann eine Warmwasserbroschüre empfangen und dargestellt werden. In Schritt S325 kann eine Themenbroschüre empfangen und dargestellt werden.

In Schritt S330 können verschiedene oft gestellte Fragen (frequently asked questions FAQ) ausgewählt werden. In den Schritten S331 bis S333 können verschiedene oft gestellte Fragen sowie die entsprechenden Antworten ausgewählt und dargestellt werden. In Schritt S340 können Kontaktinformationen ausgewählt werden. In Schritt S341 kann Kontakt zu dem Hersteller hergestellt werden. In Schritt S342 kann über eine Schnittstelle Kontakt mit einem Servicetechniker bzw. Fachhandwerker (Schritt S343) erhalten werden.

In Schritt S350 kann ein Bereich für einen Servicetechniker bzw. einen Fachhandwerker ausgewählt werden. In Schritt S351 kann optionale eine Warnung ausgegeben werden, dass die nachfolgenden Schritte lediglich durch einen Servicetechniker oder Fachhandwerker durchzuführen sind.

In Schritt S352 kann ein Fehlertyp basierend auf den in dem zweidimensionalen Code enthaltenen Informationen ermittelt werden. In den Schritten S335 und S334 können verschiedene Fehlermöglichkeiten angezeigt bzw. dargestellt werden. In Schritt S355 kann eine Fehlerursache ausgewählt werden. In Schritt S356 kann eine Fehlerdiagnose sowie Informationen zur Fahlerbehebung dargestellt werden.

In Schritt S357 kann über eine Schnittstelle eine Kommunikation mit einer Ersatzteildatenbank (Schritt S358) ermöglicht werden, wobei der Servicetechniker bzw. Fachhandwerker benötigte Ersatzteile bestellen kann.

Das Haustechnikgerät kann über einen (aufgedruckten oder aufgeklebten) zweidimensionalen Code (Barcode, QR-Code) verfügen, in welchem Informationen zu dem Haustechnikgerät codiert sind.

Auf oder an dem Haustechnikgerät kann ein Leistungsschild vorgesehen sein mit zwei Abschnitten, wobei die beiden Abschnitte gespiegelt bzw, um 180° gedreht dargestellt sind. Die Informationen (Typenschild) können in beiden Abschnitten identisch sein.

## Patentansprüche

1. Verfahren zur Fehleranalyse und Fehlerbehebung eines Haustechnikgerätes, mit den Schritten:
- Erfassen von Fehlern beim Betrieb des Haustechnikgerätes,
- Bestimmen mindestens eines Fehlercodes basierend auf den erfassten Fehlern beim Betrieb des Haustechnikgerätes,
- Umwandeln des mindestens einen Fehlercodes in einen zweidimensionalen Code,
- Anzeigen des zweidimensionalen Codes auf einer Anzeigeeinheit des Haustechnikgerätes,
- Abscannen des angezeigten Codes mittels einer Kamera eines mobilen Endgerätes,
- Decodieren des eingescannten zweidimensionalen Codes in dem mobilen Endgerät, um den mindestens einen Fehlercode zu extrahieren,
- Anzeigen des Fehlercodes und einer damit assoziierten Störung des Haustechnikgerätes,
- Anzelgen einer Ursache und/oder einer Fehlerdiagnose, und
- Anzeigen von Informationen zur Fehlerbehebung.

2. Haustechniksystem, mit
einem Haustechnikgerät (100), das eine Anzeigeneinheit (110), ein Bedienelement (120) und eine Fehlererfassungseinheit (130) aufweist, wobei ein Fehler in dem Betrieb des Haustechnikgerätes (100) in einen zweidimensionalen Code umgewandelt und auf der Anzeigeneinheit (110) dargestellt wird, und
einem mobilen Endgerät (200), das eine Anzeigeneinheit (210), eine Kamera (220) zum Abscannen eines angezeigten zweidimensionalen Codes, eine CodeDecodierungseinheit (230) zum Decodieren des abgescannten zweidimensionalen Codes und eine Steuereinheit (240) aufweist,
wobei die Steuereinheit (240) dazu ausgestaltet ist, den extrahierten Fehlercode und eine damit assoziierte Störung des Haustechnikgerätes, eine Ursache und/oder eine Fehlerdiagnose und Informationen zur Fehlerbehebung auf der Anzeigeneinheit darzustellen.
